# EUROPÄISCHE PATENTSCHRIFT

(11) **EP 3 578 295 B1**
(45) Veröffentlichungstag und Bekanntmachung des Hinweises auf die Patenterteilung: **17.03.2021**
(21) Anmeldenummer: 19163617.4
(22) Anmeldetag: 19.03.2019
(51) Int. Cl.: B23Q 17/22, G01D 5/244, G01D 3/08

(54) **POSITIONSMESSEINRICHTUNG UND VERFAHREN ZUM BETREIBEN EINER POSITIONSMESSEINRICHTUNG**
POSITION MEASURING DEVICE AND METHOD FOR OPERATING SAME
DISPOSITIF DE MESURE DE POSITION ET PROCÉDÉ DE FONCTIONNEMENT D'UN DISPOSITIF DE MESURE DE POSITION

(30) Priorität: 08.06.2018 DE 102018209136
(43) Veröffentlichungstag der Anmeldung: 11.12.2019
(73) Patentinhaber: Dr. Johannes Heidenhain GmbH, 83301 Traunreut (DE)
(72) Erfinder: JOACHIMSTHALER, Ingo, 83278 Traunstein (DE); SOIER, Johannes, 84431 Heldenstein (DE)

(56) Entgegenhaltungen:
- US-A1- 2005 238 043
- US-A1- 2015 352 679

## Beschreibung

### GEBIET DER TECHNIK

Die vorliegende Erfindung betrifft eine Positionsmesseinrichtung nach Anspruch 1, sowie ein Verfahren zum Betreiben einer Positionsmesseinrichtung nach Anspruch 10. Insbesondere betrifft die Erfindung die Feststellung von Kollisionsereignissen in einer Positionsmesseinrichtung.

### STAND DER TECHNIK

Viele Abläufe in der Automatisierungstechnik basieren auf der von Elektromotoren gesteuerten Bewegung von Maschinenteilen. Die Position der Maschinenteile wird dabei von Positionsmesseinrichtungen bestimmt. So messen Drehgeber oder Winkelmessgeräte rotatorische Bewegungen, beispielsweise von sich drehenden Wellen. Längenmessgeräte dagegen messen lineare Verschiebungen zueinander beweglich angeordneter Maschinenteile.

Besonders bei komplexen Anlagen, wie beispielsweise Werkzeugmaschinen oder Fertigungsrobotern, bei denen Bewegungen in mehreren Bewegungsachsen möglich sind, besteht die Gefahr von Kollisionen. Kollisionen erfolgen dann, wenn ein bewegtes Teil unplanmäßig auf ein Hindernis trifft. Ein typisches Beispiel bei Werkzeugmaschinen ist es, wenn die Werkzeugspindel, in der ein Bearbeitungswerkzeug angeordnet ist, während eines Positionierungsvorgangs auf das zu bearbeitende Werkstück oder auf ein Spannmittel trifft. Ursache kann sein, dass sich das Werkstück oder die Spannmittel nicht an der Position befinden, an der sie entsprechend dem Bearbeitungsprogramm sein müssten, oder dass während der Programmierung eines Bearbeitungsprogramms fälschlicherweise eine Bewegungsbahn zur Kollision führt. Bei Fertigungsrobotern verhält es sich ähnlich, hier kann beispielsweise eine falsche Bewegung eines Roboterarms, oder ein zu bearbeitendes Teil (oder ein anderes Hindernis), das sich in der Bewegungsbahn befindet, eine Kollision auslösen.

Bei Kollisionen treten hohe Beschleunigungen auf, die die an der Kollision beteiligten Komponenten beschädigen können. Neben unmittelbaren Schäden an der Maschine oder dem Hindernis können bei Maschinen auch Vorschädigungen auftreten, die zunächst unbemerkt bleiben und erst nach einer gewissen Zeit zu einem Ausfall der Maschine führen. Ein Zusammenhang des Ausfalls mit einer Kollision ist dann aber nicht mehr nachzuweisen. Aus diesem Grund ist man bestrebt, Kollisionen zu erkennen und zu protokollieren, so dass im Schadensfall die Fehlerursache bzw. der Verursacher identifiziert werden kann. Ebenso ermöglicht die Detektion einer Kollision auch eine präventive Wartung der Maschine, so dass ein späterer Ausfall verhindert wird.

So schlagen die WO 03/023528 A2, US 2015/352679 A1 und US 2005/238043 A1 vor, eine separate Überwachungseinrichtung vorzusehen, die durch Auswertung von Sensordaten Kollisionen erkennt und dann die Sensordaten zu einer Maschinensteuerung zur dauerhaften Speicherung sendet. Neben einem zusätzlichen Gerät erfordert diese Lösung auch zusätzlichen Verkabelungsaufwand, sowie eine geeignete Schnittstelle an der Maschinensteuerung.

### ZUSAMMENFASSUNG DER ERFINDUNG

Es ist Aufgabe der Erfindung, eine einfachere Möglichkeit zu schaffen, um Kollisionsereignisse festzustellen.

Diese Aufgabe wird gelöst durch eine Positionsmesseinrichtung nach Anspruch 1.

Vorteilhafte Ausgestaltungen einer erfindungsgemäßen Positionsmesseinrichtung ergeben sich aus den von Anspruch 1 abhängigen Ansprüchen.

Weiter ist es Aufgabe der Erfindung, ein vereinfachtes Verfahren zur Feststellung von Kollisionsereignissen anzugeben.

Diese Aufgabe wird gelöst durch ein Verfahren zum Betreiben einer Positionsmesseinrichtung nach Anspruch 10.

Vorteilhafte Ausgestaltungen des erfindungsgemäßen Verfahrens ergeben sich aus den von Anspruch 10 abhängigen Ansprüchen.

Weitere Vorteile ergeben sich aus der nachfolgenden Beschreibung der Ausführungsbeispiele.

### KURZE BESCHREIBUNG DER ZEICHNUNGEN

### Es zeigt

- Figur 1: eine vereinfachte Darstellung einer Motorspindel einer Werkzeugmaschine,
- Figur 2: ein Blockschaltbild einer erfindungsgemäßen Positionsmesseinrichtung,
- Figur 3: ein Zeitdiagramm des Beschleunigungsverlaufs eines Kollisionsereignisses,
- Figur 4: eine erste Ausführungsform einer Auswerteeinheit,
- Figur 5: ein weiteres Ausführungsbeispiel einer Auswerteeinheit und
- Figur 6: ein weiteres Ausführungsbeispiel einer Auswerteeinheit.

### BESCHREIBUNG DER AUSFÜHRUNGSFORMEN

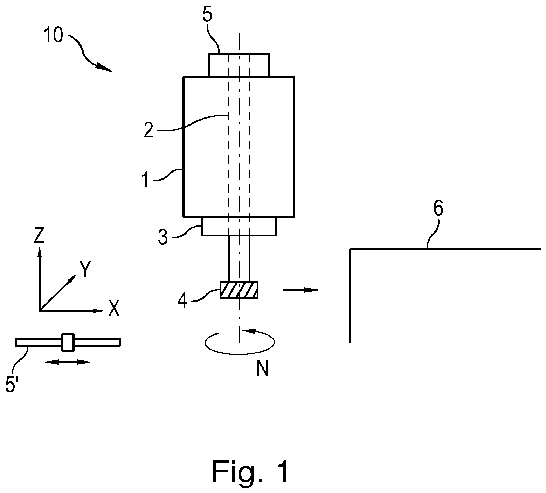

Figur 1 zeigt in vereinfachter Weise eine Motorspindel 10 einer Werkzeugmaschine. Die zentrale Komponente ist ein Spindelmotor 1 mit einer Welle 2. An einem Ende der Welle 2 ist eine Werkzeugaufnahme 3 zur Aufnahme eines Werkzeugs 4 (beispielsweise ein Fräswerkzeug) vorgesehen. Ebenso mechanisch mit der Welle 2 gekoppelt ist eine Positionsmesseinrichtung 5, ausgeführt als Winkelmessgerät (Drehgeber). Die Kopplung erfolgt über eine (nicht dargestellte) mechanische Kupplung, die eine drehbare Welle der Positionsmesseinrichtung 5 mit der Welle 2 verbindet. Auf diese Weise sind Winkelposition und/oder Anzahl der zurückgelegten Umdrehungen der Welle 2 mit der Positionsmesseinrichtung 5 messbar.

Während der Bearbeitung eines Werkstücks 6 dreht sich die Welle 2 mit einer Drehzahl N und das Werkzeug 4 wird durch Verfahren der Motorspindel 10 in mehreren Antriebsachsen X, Y, Z mit dem Werkstück 6 in Kontakt gebracht. So wird beispielsweise bei einer Fräsbearbeitung die gewünschte Kontur aus dem Werkstück 6 gefräst. Neben den dargestellten linearen Antriebsachsen X, Y, Z können auch bis zu zwei Schwenkachsen vorgesehen sein, so dass eine Bewegung der Motorspindel 10 (und damit des Werkzeugs 4) in fünf Bewegungsachsen möglich ist. Zur Feststellung der Position der jeweiligen Antriebsachsen sind weitere Positionsmesseinrichtungen vorgesehen. In Figur 1 ist stellvertretend eine Positionsmesseinrichtung 5' zur Bestimmung der Position in Bewegungsrichtung X dargestellt. Die Positionsmesseinrichtung 5' ist hierbei, wie für die Positionsbestimmung von linearen Antriebsachsen X, Y, Z bevorzugt, als Längenmessgerät ausgeführt. Zur Positionsbestimmung von Schwenkachsen werden dagegen bevorzugt Winkelmessgeräte eingesetzt.

Insbesondere bei der Positionierung des Werkzeugs 4 zur Anfangsposition einer Bearbeitung besteht nun die Gefahr einer Kollision. Während der Positionierung ist dies besonders kritisch, da hier mit hohen Verfahrgeschwindigkeiten gearbeitet wird, um die Bearbeitungszeit des Werkstücks 6 zu minimieren. Kollisionen können zwischen dem Werkzeug 4 oder einem beliebigen Punkt der Außenkontur der Motorspindel 10 mit dem Werkstück 6 oder mit (nicht dargestellten) Spannmitteln, die zur Fixierung des Werkstücks 6 auf einem Maschinentisch der Werkzeugmaschine dienen, stattfinden.

Durch die mechanische Kopplung der Positionsmesseinrichtungen 5, 5' mit bewegten Maschinenkomponenten (z.B. zwischen der Welle 2 und der Positionsmesseinrichtung 5) übertragen sich Kollisionsereignisse auch auf die Positionsmesseinrichtungen 5, 5'.

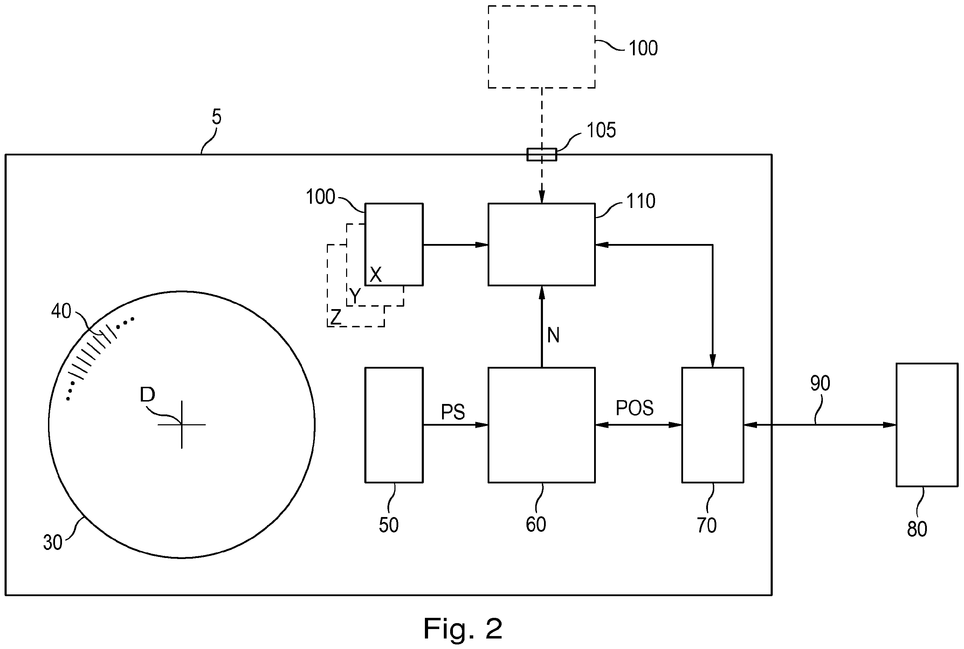

Figur 2 zeigt ein Blockschaltbild einer erfindungsgemäßen Positionsmesseinrichtung 5. Sie umfasst einen Teilungsträger 30 mit einer Messteilung 40, eine Abtasteinrichtung 50, eine Verarbeitungseinheit 60, sowie eine Schnittstelleneinheit 70.

Der Teilungsträger 30 ist ringförmig oder als kreisrunde Scheibe ausgestaltet und für den Betrieb der Positionsmesseinrichtung 5 um einen Drehpunkt D drehbar gelagert und drehfest mit der Welle 2 verbunden, deren Winkelstellung und ggf. Anzahl zurückgelegter Umdrehungen mit der Positionsmesseinrichtung 5 gemessen werden soll. Die Messteilung 40 ist radial um den Drehpunkt D angeordnet und weist wenigstens eine Teilungsspur auf, deren Abtastung eine Positionsbestimmung (Winkelbestimmung) erlaubt.

Die Abtasteinrichtung 50 ist gegenüber dem Teilungsträger 30 stationär angeordnet und geeignet ausgestaltet, um die Messteilung 40 auf dem Teilungsträger 30 abzutasten und in Abhängigkeit des Drehwinkels des Teilungsträgers 30 positionsabhängige (winkelabhängige) Positionssignale PS zu generieren. Die Positionssignale PS können analoge, oder digital codierte Signale umfassen.

Die vorliegende Erfindung ist auf kein physikalisches Abtastprinzip festgelegt. So können an sich bekannte induktive, lichtelektrische, magnetische oder kapazitive Abtastprinzipien zum Einsatz kommen.

Die Positionssignale PS sind der Verarbeitungseinheit 60 zugeführt, die diese zu einem Positionswert POS verarbeitet und an die Schnittstelleneinheit 70 ausgibt. Auf die Verarbeitung wird hier nicht weiter eingegangen, es können Verarbeitungsschritte wie Signalkorrektur, Demodulation, Digitalisierung, etc. ausgeführt werden.

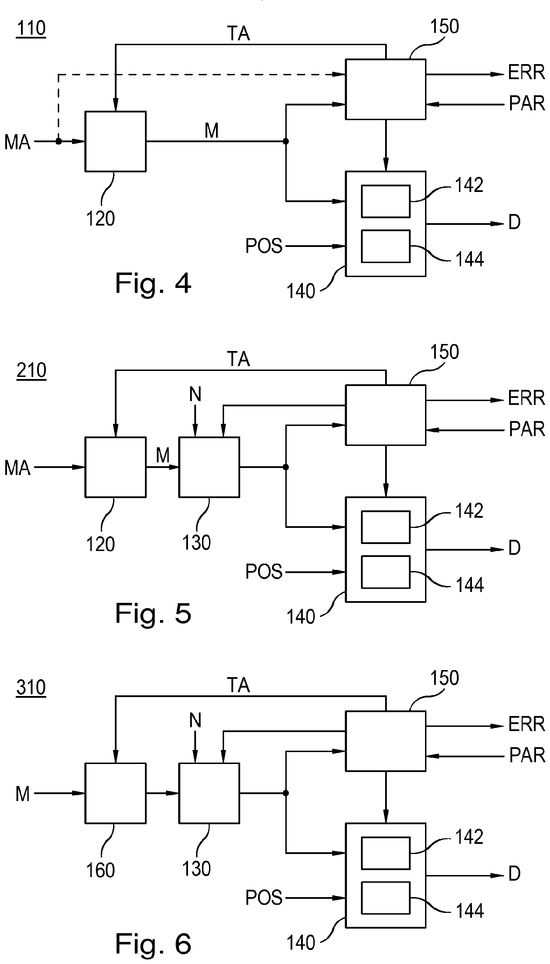

Neben Positionswerten POS können in der Verarbeitungseinheit 60 aus den Positionssignalen PS auch noch weitere Bewegungswerte wie Drehzahl N (Winkelgeschwindigkeit), Beschleunigung oder Ruck abgeleitet werden. Diese können über der Schnittstelleneinheit 70 zugeführt sein, oder, wie später anhand der Figuren 5 und 6 gezeigt werden wird, der internen Verwendung in der Positionsmesseinrichtung 5 dienen.

Die Schnittstelleneinheit 70 dient zur Kommunikation mit einer Folgeelektronik 80 über einen Datenübertragungskanal 90. Die Schnittstelleneinheit 70 kann als serielle Schnittstelle ausgeführt sein, d.h. die Datenübertragung über den Datenübertragungskanal 90 erfolgt in Form von seriellen Datenströmen, bzw. Datenpaketen. Mit Vorteil ist die Schnittstelleneinheit 70 bidirektional ausgeführt, so dass Daten D, insbesondere Positionswerte POS und ggf. weitere Bewegungswerte, zur Folgeelektronik 80 gesendet werden können, sowie Daten D, insbesondere Parameter PAR, von der Folgeelektronik 80 empfangbar sind.

Erfindungsgemäß sind der Positionsmesseinrichtung 5 nun wenigstens ein Kollisionssensor 100, sowie eine Auswerteeinheit 110 zur Feststellung von Kollisionsereignissen basierend auf den Messwerten von wenigstens einem Kollisionssensor 100, zugeordnet.

Besonders geeignet zur Feststellung von Kollisionsereignissen sind Beschleunigungssensoren oder Körperschallsensoren, also Kollisionssensoren 100, mit denen Beschleunigungen messbar sind, da Kollisionen immer auch zu spontanen Änderungen, insbesondere einer Verringerung, einer Bewegungsgeschwindigkeit führen (negative Beschleunigung).

Eine besonders vorteilhafte Anordnung ergibt sich, wenn je Raumrichtung X, Y, Z ein Kollisionssensor 100 vorgesehen ist, da dann aus den Messwerten der Einzelsensoren auf den Auftreffwinkel einer Kollision geschlossen werden kann.

Der Kollisionssensor 100 kann, wie durch die gestrichelten Linien angedeutet, außerhalb der Positionsmesseinrichtung 5 angeordnet sein, mit Vorteil an einer Stelle, an der er mechanisch steif mit der Welle 2 gekoppelt ist, beispielsweise an einem Drehlager des Spindelmotors 1. Der elektrische Anschluss des Kollisionssensors 100 kann in diesem Fall über eine geeignete Anschlusseinheit 105 am Gehäuse der Positionsmesseinrichtung 5 mittels einer Steck-, Schraub-, Klemm-, oder einer Lötverbindung erfolgen.

Durch die Tatsache, dass sich Kollisionsereignisse durch die mechanische Kopplung der Positionsmesseinrichtung 5 mit der Welle 2 immer auch direkt auf die Positionsmesseinrichtung 5 auswirken, wird es jedoch als besonders vorteilhaft angesehen, den Kollisionssensor 100 innerhalb des Gehäuses der Positionsmesseinrichtung 5 anzuordnen. Dadurch entfällt jeglicher Aufwand zum Anschluss des Kollisionssensors 100 an die Positionsmesseinrichtung 5 und ebenso die Montage des Kollisionssensors 100 zur Kopplung mit der Welle 2 des Spindelmotors 1 (oder einer anderen geeigneten mechanischen Komponente der Motorspindel 10). Innerhalb des Gehäuses der Positionsmesseinrichtung 5 kann der Kollisionssensor 100 beispielsweise zusammen mit weiteren elektronischen und elektromechanischen Komponenten auf einer Leiterplatte angeordnet sein. Ebenso besteht die Möglichkeit, den Kollisionssensor 100 an einer mechanischen Komponente anzuordnen, die eine mechanisch besonders steife Kopplung mit der Welle 2 aufweist, beispielsweise ein Drehlager oder die Kupplung.

Die Auswerteeinheit 110 dient dazu, Messwerte des wenigstens einen Kollisionssensors 100 zu erfassen und in Bezug auf das Auftreten wenigstens einer Kenngröße eines Kollisionsereignisses auszuwerten. Kenngrößen von Kollisionsereignissen sind beispielsweise
- das spontane Auftreten einer Beschleunigung, bzw. die Überschreitung eines Grenzwerts für die Beschleunigung, oder
- eine spontane Änderung einer Beschleunigung, bzw. die Überschreitung eines Grenzwerts für die Änderung der Beschleunigung.

Alternativ kann auch ein Längenmessgerät (Positionsmesseinrichtung 5' in Figur 1) erfindungsgemäß ausgeführt werden. Im Vergleich zu einem Winkelmessgerät (Drehgeber), ist bei einem Längenmessgerät der Teilungsträger ein gerader Maßstab, auf dem die Messteilung angeordnet ist. Zur Positionsmessung wird ein Abtastkopf linear entlang des Maßstabs, bzw. der Messteilung geführt, wobei in einem Gehäuse des Abtastkopfes die Abtasteinrichtung 50, die Verarbeitungseinheit 60, die Schnittstelleneinheit 70, wenigstens ein Kollisionssensor 100, sowie die Auswerteeinheit 110 angeordnet sein können.

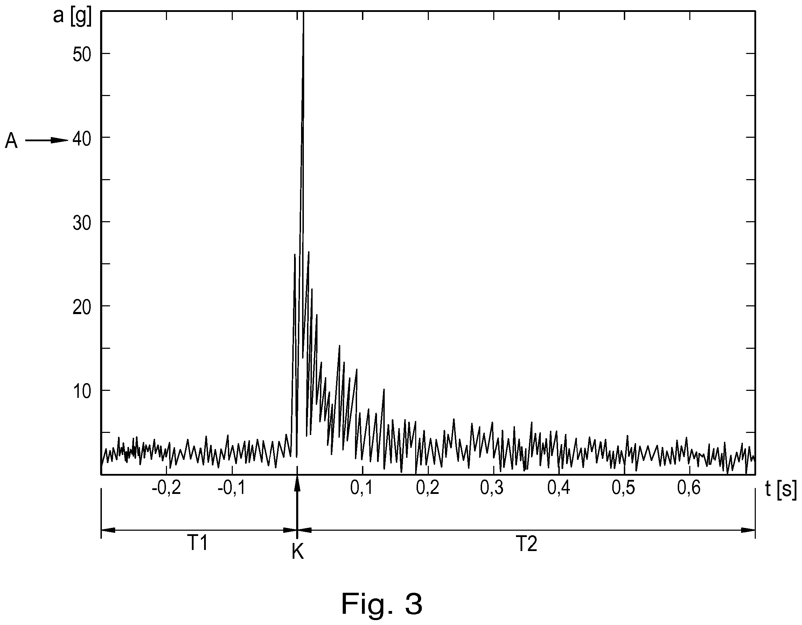

Figur 3 zeigt beispielhaft einen zeitlichen Verlauf eines Kollisionsereignisses. Dabei ist in einem ersten Zeitraum T1 der Signalverlauf vor der Kollision und in einem zweiten Zeitraum T2 der Signalverlauf nach der Kollision dargestellt.

Die Kollision erfolgt zum Zeitpunkt K und wird von der Auswerteeinheit 110 detektiert. Die Erkennung erfolgt über das Auftreten/Überschreiten einer Kenngröße von Kollisionsereignissen, beispielsweise die Überschreitung einer maximalen Beschleunigung A. Da der tatsächliche Zeitpunkt der Kollision (also der Zeitpunkt des ersten mechanischen Kontakts) und der Zeitpunkt der Erkennung des Kollisionsereignisses sehr kurz aufeinanderfolgen, werden diese Zeitpunkte im Folgenden nicht unterschieden und vereinfacht als ein Kollisionszeitpunkt K bezeichnet.

Im ersten Zeitraum T1 vor der Kollision zeigt das Signal lediglich statistische Änderungen der Beschleunigung (Signalrauschen). Die Kollision bewirkt ein spontanes Ansteigen der Beschleunigung, die zum Kollisionszeitpunkt K die maximale Beschleunigung A übersteigt, so dass von der Auswerteeinheit 110 das Kollisionsereignis erkannt wird.

Im zweiten Zeitraum T2 klingt die durch die Kollision erzeugte Schwingung wieder ab, bis gegen Ende des zweiten Zeitraums T2 das Signal wieder das Verhalten vor der Kollision zeigt.

Figur 4 zeigt hierzu eine erste Ausführungsform einer Auswerteeinheit 110. Sie ist geeignet zur Verarbeitung und Auswertung der Messwerte analoger Kollisionssensoren 100.

Die analogen Messwerte MA des Kollisionssensors 100 sind einem A/D-Wandler 120 zugeführt, der die analogen Messwerte MA digitalisiert. Die resultierenden digitalen Messwerte M sind zum einen einer Speichereinheit 140 und zum anderen einer Steuereinheit 150 zugeführt.

Die Steuereinheit 150 steuert die wesentlichen Abläufe in der Auswerteeinheit 110. So führt sie dem A/D-Wandler 120 ein Abtasttaktsignal TA zu, das die Abtastrate festlegt, mit der die analogen Messwerte MA digitalisiert werden. Ebenso steuert sie die Speicherung der digitalen Messwerte M in der Speichereinheit 140. Darüber hinaus ist sie geeignet ausgestaltet, um Kollisionsereignisse zu erkennen.

Im laufenden Betrieb der Auswerteeinheit 110 werden die analogen Messwerte MA des Kollisionssensors 100 kontinuierlich im Zeitraster des Abtasttaktsignals TA digitalisiert und hintereinander in der Speichereinheit 140 gespeichert. Dadurch entsteht in der Speichereinheit 140 ein digitales Abbild des Signalverlaufs, der vom Kollisionssensor 100 ausgegeben wird. Die Speicherung erfolgt in einem RAM-Speicherbereich 142 der Speichereinheit 140. Die Speicherkapazität ist dabei so gewählt, dass wenigstens der Signalverlauf eines Kollisionsereignisses speicherbar ist. Der RAM-Speicherbereich 142 wird dabei als Ringspeicher betrieben, das bedeutet, dass bei Erreichen der letzten Speicherzelle des für den Signalverlauf eines Kollisionsereignisses vorgesehenen RAM-Speicherbereichs 142 auf die erste Speicherzelle zurückgesprungen wird, so dass die jeweils ältesten Messwerte überschrieben werden.

Der laufende Betrieb kann mit dem Einschalten der Maschine (und damit dem Einschalten der Positionsmesseinrichtung 5, bzw. 5') gestartet werden. Mit Vorteil erfolgt das Starten oder Stoppen des laufenden Betriebs jedoch über Befehle, die von der Folgeelektronik 80 zur Positionsmesseinrichtung 5, bzw. 5' gesendet werden.

Die Steuereinheit 150 wertet die eintreffenden digitalen Messwerte M in Bezug auf wenigstens eine Kenngröße eines Kollisionsereignisses aus und steuert in Abhängigkeit davon das Speichern der digitalen Messwerte M in der Speichereinheit 140. Die Auswertung erfolgt ebenfalls im Zeitraster des Abtasttaktsignals TA. Dabei werden die eintreffenden Messwerte M bezüglich einer Überschreitung eines Grenzwertes überprüft. Die Frequenz des Abtasttaktsignals TA ist dabei so gewählt, dass Kollisionsereignisse sicher erkannt werden können. Hierbei sind Maschinenparameter wie z.B. maximal auftretende Geschwindigkeiten, oder Beschleunigungen im Normalbetrieb, sowie Gewicht und Gewichtsverteilung der von möglichen Kollisionen betroffenen Maschinenkomponenten zu berücksichtigen.

Alternativ können der Steuereinheit 150 auch die analogen Messwerte MA des Kollisionssensors 100 zur Auswertung bezüglich eines Kollisionsereignisses zugeführt sein. Die Überprüfung auf eine Überschreitung des Grenzwertes kann in diesem Fall durch Vergleich der analogen Messwerte MA mit dem Grenzwert mittels eines Komparators erfolgen.

Gegebenenfalls können mehrere Grenzwerte vorgesehen sein, so dass verschieden starke Kollisionsereignisse unterscheidbar sind.

Stellt die Steuereinheit 150 zum Kollisionszeitpunkt K ein Kollisionsereignis fest, so führt sie die Speicherung der digitalen Messwerte M über den zweiten Zeitraum T2 weiter und stoppt dann die Aufzeichnung. Der für den Signalverlauf des Kollisionsereignisses vorgesehene RAM-Speicherbereich 142 ist dabei so dimensioniert, dass er den ersten Zeitraum T1 vor der Kollision, sowie den zweiten Zeitraum T2 nach der Kollision umfasst. Darüber hinaus generiert die Steuereinheit 150 eine Fehlermeldung ERR zur Signalisierung des erkannten Kollisionsereignisses über die Schnittstelleneinheit 70 und den Datenübertragungskanal 90 an die Folgeelektronik 80. Die Übertragung der Fehlermeldung ERR kann in Form von wenigstens einem Statusbit erfolgen, das in einem Datenrahmen enthalten ist, der im laufenden Betrieb zur Übertragung von Positionswerten POS dient. Es kann aber auch eine separate Leitung hierfür vorgesehen sein. Wesentlich ist, dass die Signalisierung des Kollisionsereignisses an die Folgeelektronik 80 unmittelbar nach dessen Feststellung erfolgt, während die Übertragung der Daten D des dazugehörenden gespeicherten Signalverlaufs zu einem beliebigen späteren Zeitpunkt initiiert werden kann. Auf diese Weise kann die Folgeelektronik 80 sofort auf ein aufgetretenes Kollisionsereignis reagieren, aber die Analyse des Ereignisses auf einen späteren Zeitpunkt verschieben.

Für eine noch umfassendere Analyse eines Kollisionsereignisses ist es vorteilhaft, neben dem Signalverlauf der digitalen Messwerte M des wenigstens einen Kollisionssensors 100 weitere Signalverläufe von zur Verfügung stehenden Messwerten zu speichern. So können der Speichereinheit 140 auch die Positionswerte POS zugeführt sein und dort parallel zu den digitalen Messwerten M gespeichert werden. Auf diese Weise kann in der Folgeelektronik 80 eine Korrelation zwischen dem Verlauf der Messwerte M und den Positionswerten POS festgestellt werden.

Ist der RAM-Speicherbereich 142 als flüchtiger Speicher ausgeführt, der ohne Stromversorgung den Speicherinhalt verliert, so ist es vorteilhaft, einen nichtflüchtigen, programmierbaren Speicherbereich 144 (EEPROM, Flash-Speicher) vorzusehen, in dem im RAM-Speicherbereich 142 gespeicherte Signalverläufe nach Abschluss der Aufzeichnung speicherbar ist. Da eine Kollision bei einer Werkzeugmaschine häufig zu einer Notabschaltung führt, bleiben die erfassten Daten so für eine spätere Auswertung erhalten.

Die Speicherkapazität des RAM-Speicherbereichs 142 und/oder des programmierbaren Speicherbereichs 144 der Speichereinheit 144 ist mit Vorteil so dimensioniert, dass eine Mehrzahl von Signalverläufen von Kollisionsereignissen speicherbar sind.

Die oben beschriebenen Kenngrößen für Kollisionsereignisse sind, insbesondere bei Werkzeugmaschinen, nicht eindeutig, d.h. sie können auch andere Ursachen haben als Kollisionen. So können bei der Bearbeitung von Werkstücken Beschleunigungen in der gleichen Größenordnung auftreten, wie sie auch bei Kollisionen vorkommen. Eine mögliche Ursache von derart hohen Beschleunigungen sind sogenannte "Ratterschwingungen". Sie entstehen beispielsweise beim Fräsen von Werkstücken durch die Kräfte, die auftreten, wenn die Schneiden des Fräsers auf das Werkstück auftreffen und stellen nicht zwingend eine Fehlfunktion bei der Bearbeitung dar. Im Vergleich zum impulsförmigen Beschleunigungsverlauf bei tatsächlichen Kollisionen (Figur 3) weisen Ratterschwingungen, bedingt durch die Rotation des Fräsers und die regelmäßige Anordnung von Schneiden über den Umfang des Fräsers, einen oszillierenden Verlauf auf, wobei sich die Oszillation meist über mehrere Perioden aufschwingt.

Eine weitere Ursache für das Auftreten von hohen Beschleunigungen können Geräteresonanzen der Werkzeugmaschine sein. Auch hierbei handelt es sich um oszillierende, periodische Signalverläufe.

Durch die hohe Rechenleistung, die üblicherweise in der Folgeelektronik 80 vorhanden ist, sind Signalverläufe von Kollisionsereignissen, die aus tatsächlichen Kollisionen resultieren, von denen, die andere Ursachen haben, dort leicht zu unterscheiden. Daher kann es sinnvoll sein, alle Signalverläufe von Kollisionsereignissen, die basierend auf dem Überschreiten wenigstens einer der oben genannten Kenngrößen aufgezeichnet und gespeichert wurden, zur Folgeelektronik 80 zu übertragen. Um jedoch unnötige Fehlermeldungen oder Notabschaltungen der Werkzeugmaschine zu vermeiden, ist es besonders vorteilhaft, die Auswerteeinheit 110 so auszugestalten, dass das oszillierende Auftreten von hohen Beschleunigungen, die Kenngrößen von Kollisionsereignissen überschreiten, unberücksichtigt bleibt. Hierzu kann beispielsweise die Steuereinheit 150 geeignet ausgestaltet sein, dass derartige Ereignisse (periodisches Überschreiten von Beschleunigungs-Grenzwerten) erkennbar sind und in solchen Fällen die Speicherung von Messwerten fortgeführt wird. Dies erhöht die Wahrscheinlichkeit, dass ein Kollisionsereignis, das aufgrund einer Überschreitung einer charakteristischen Kenngröße detektiert wurde, die Folge einer tatsächlichen Kollision ist. Die endgültige Bestätigung, dass eine Kollision vorlag, erfolgt auch hier durch Auswertung des aufgezeichneten Signalverlaufs in der Folgeelektronik 80.

Mit Vorteil ist die Steuereinheit 150 parametrierbar ausgeführt, so dass wenigstens einer der folgenden Parameter PAR einstellbar ist:
- wenigstens eine Kenngröße von Kollisionsereignissen, die berücksichtigt wird,
- der Grenzwert der wenigstens einen Kenngröße,
- die Abtastrate, mit der Messwerte digitalisiert und gespeichert werden,
- der Zeitraum T1,
- der Zeitraum T2.

Die Einstellung der Parameter PAR erfolgt mit Vorteil von der Folgeelektronik 80 über den Datenübertragungskanal 90 und die Schnittstelleneinheit 70.

Ist in der Positionsmesseinrichtung 5, 5' mehr als ein Kollisionssensor 100 vorgesehen, so sind auch die Komponenten der Auswerteeinheit 110 ggf. mehrfach vorhanden, so dass die digitalen Messwerte M der Einzelsensoren weitgehend parallel verarbeitbar und speicherbar sind. Ebenso können die Parameter PAR je Kollisionssensor vorgesehen sein. Darüber hinaus ist es bei mehreren Kollisionssensoren 100 vorteilhaft, die Signalverläufe aller Kollisionssensoren 100 zu speichern, sobald die Messwerte M wenigstens eines der Kollisionssensoren 100 einen Grenzwert für ein Kollisionsereignis überschreiten.

Figur 5 zeigt eine alternative Ausführungsform einer Auswerteeinheit 210. Sie ist ebenfalls geeignet für den Einsatz von analogen Kollisionssensoren 100. Komponenten, die bereits in Verbindung mit Figur 4 beschrieben wurden, tragen das gleiche Bezugszeichen.

In Ergänzung zum vorherigen Ausführungsbeispiel umfasst die Auswerteeinheit 210 eine Filtereinheit 130, die zwischen dem A/D-Wandler 120 und der Steuereinheit 150, bzw. der Speichereinheit 140 angeordnet ist. Die Filtereinheit 130 ist als Bandsperrfilter, insbesondere als Kerbfilter ausgestaltet, so dass die Frequenzanteile wenigstens eines Frequenzbandes des Frequenzspektrums der Messwerte gedämpft, bzw. unterdrückt werden. Auf diese Weise können Ereignisse, die ein periodisches Überschreiten von Beschleunigungsgrenzwerten hervorrufen (Ratterschwingungen, Geräteresonanzen), herausgefiltert werden. Da der impulsförmige Verlauf der Messwerte des Kollisionssensors, wie er in Figur 3 dargestellt ist, ein sehr breites Frequenzspektrum umfasst, kann trotz der Filterung in der Steuereinheit 150 weiterhin eine Überprüfung auf Kollisionsereignisse basierend auf den Nachweis einer Überschreitung der o.g. Beschleunigungsgrenzwerte erfolgen. Andererseits kann ggf. darauf verzichtet werden, die Steuereinheit 150 so auszubilden, dass sie oszillierende Beschleunigungsereignisse erkennt, da diese bereits von der Filtereinheit 130 herausgefiltert werden.

Mit Vorteil ist das zu filternde Frequenzband einstellbar. Dies kann über geeignete Parameter PAR erfolgen, die der Filtereinheit 130 von der Steuereinheit 150 zuführbar sind.

Besteht ein Zusammenhang zwischen dem zu filternden Frequenzband und dem Verlauf der Positionswerte POS der Positionsmesseinrichtung 5, 5', so ist es besonders vorteilhaft, wenigstens ein zu filterndes Frequenzband in Abhängigkeit dieses Zusammenhangs automatisch einzustellen. Dies ist zum Beispiel bei Positionsmesseinrichtungen 5 der Fall, die die Winkelposition der Welle 2 der Motorspindel 10 einer Werkzeugmaschine messen. Wie oben beschrieben resultiert die Frequenz von Ratterschwingungen aus der Drehzahl N des Spindelmotors 1 und der Anzahl der Schneiden des verwendeten Werkzeugs 4. Sollen Ratterschwingungen gefiltert werden, so erfolgt die Bestimmung des zu filternden Frequenzbandes durch Multiplikation der Drehzahl N mit einem Multiplikator. Dieser kann der Filtereinheit 130 von der Steuereinheit 150 zugeführt werden.

Somit kann die oben aufgeführte Liste von möglichen Parametern PAR der Steuereinheit 150 ergänzt werden durch
- Kenngrößen wenigstens eines zu filternden Frequenzbandes (beispielsweise obere und untere Grenzfrequenz oder Mittenfrequenz und Breite des Frequenzbandes),
- einen Multiplikator.

Bei der Filtereinheit 130 in Figur 5 handelt es sich um ein digitales Filter. Alternativ kann eine analoge Filtereinheit vor dem A/D-Wandler 120 angeordnet sein.

Figur 6 zeigt eine weitere Ausführungsform einer Auswerteeinheit 310. Sie ist geeignet für den Einsatz von digitalen Kollisionssensoren 100. Komponenten, die bereits in Verbindung mit den Figuren 4 oder 5 beschrieben wurden, tragen das gleiche Bezugszeichen.

An Stelle eines A/D-Wandlers ist in diesem Ausführungsbeispiel eine digitale Sensorschnittstelle 160 vorgesehen, um die digitalen Messwerte M eines Kollisionssensors 100 direkt zu erfassen. Die Sensorschnittstelle 160 ist bevorzugt eine serielle Schnittstelle, beispielsweise eine I2C-Schnittstelle. Sind mehrere Kollisionssensoren 100 vorhanden, so können diese entweder in einem Busbetrieb an nur einer Sensorschnittstelle 160 betrieben werden, es kann aber auch je Kollisionssensor 100 eine Sensorschnittstelle 160 vorgesehen sein.

Die Anforderung von digitalen Messwerten M des Kollisionssensors 100 über die Sensorschnittstelle 160 wird auch in diesem Beispiel mit Vorteil im Zeitraster des Abtasttaktsignals TA der Steuereinheit 150 initiiert. Eintreffende digitale Messwerte M sind, wie im vorhergehenden Beispiel, erst der Filtereinheit 130 zugeführt, bevor sie in der Steuereinheit 150 ausgewertet, bzw. in der Speichereinheit 140 gespeichert werden.

Es sei darauf hingewiesen, dass auch dieses Ausführungsbeispiel, analog zu Figur 4, ohne Filtereinheit 130 ausgeführt werden kann. In diesem Fall kann die Erkennung oszillierender Beschleunigungsereignisse, die aus Ratterschwingungen oder Geräteresonanzen resultieren, in der Folgeelektronik 80 oder in der Steuereinheit 150 erfolgen.

Die vorliegende Erfindung ist selbstverständlich nicht auf die beschriebenen Ausführungsbeispiele beschränkt, sondern kann von einem Fachmann im Rahmen der Ansprüche alternativ ausgestaltet werden. Insbesondere können neben, oder an der Stelle von, Beschleunigungssensoren oder Körperschallsensoren auch andere Sensoren zum Einsatz kommen, mit denen Kollisionsereignisse erkennbar sind, beispielsweise Sensoren, mit denen eine Verbiegung oder Verlagerung eines Maschinenteils in Folge einer Kollision feststellbar ist.

## Patentansprüche

1. Positionsmesseinrichtung, umfassend
• einen Teilungsträger (30) mit einer Messteilung (40),
• eine Abtasteinrichtung (50) zur Erzeugung von Positionssignalen (PS) durch Abtastung der Messteilung (40),
• einer Verarbeitungseinheit (60) zur Verarbeitung der Positionssignale (PS) in einen digitalen Positionswert (POS),
• eine Schnittstelleneinheit (70) zur Kommunikation mit einer Folgeelektronik (80),
wobei die Positionsmesseinrichtung (5) wenigstens einen Kollisionssensor (100) aufweist, der analoge oder digitale Messwerte (MA, M) generiert, aus deren zeitlichem Verlauf Kollisionsereignisse feststellbar sind, und wobei die Positionsmesseinrichtung (5) eine Auswerteeinheit (110, 210, 310) zur Erfassung der Messwerte (MA, M) aufweist, wobei die Auswerteeinheit (110, 210, 310) eine Steuereinheit (150) umfasst, die geeignet ausgestaltet ist, durch Auswertung des zeitlichen Verlaufs der Messwerte (MA, M) Kollisionsereignisse zu erkennen und bei Erkennung eines Kollisionsereignisses eine Fehlermeldung (ERR) zu generieren und die Fehlermeldung (ERR) über die Schnittstelleneinheit (70) zur Folgeelektronik (80) zu übertragen.

2. Positionsmesseinrichtung nach Anspruch 1, wobei die Auswertung des zeitlichen Verlaufs der Messwerte (MA, M) im Zeitraster eines Abtasttaktsignals (TA) erfolgt, das von der Steuereinheit (150) bereitgestellt wird.

3. Positionsmesseinrichtung nach Anspruch 1, wobei der Kollisionssensor (100) ein analoger Sensor ist und in der Auswerteeinheit (110, 210) ein A/D-Wandler (120) zur Bildung von digitalen Messwerten (M) aus analogen Messwerten (MA) vorgesehen ist und wobei die Bildung der digitalen Messwerte (M) vom Abtasttaktsignal (TA) gesteuert wird, das dem A/D-Wandler (120) von der Steuereinheit (150) zugeführt ist.

4. Positionsmesseinrichtung nach einem der Ansprüche 1 oder 2, wobei der Kollisionssensor (100) ein digitaler Sensor ist und in der Auswerteeinheit (310) eine Sensorschnittstelle (160) vorhanden ist, über die digitale Messwerte (M) des Kollisionssensors (100) der Auswerteeinheit (310) zuführbar sind.

5. Positionsmesseinrichtung nach einem der vorhergehenden Ansprüche, wobei in der Auswerteeinheit (110, 210, 310) weiter eine als Ringspeicher betriebene Speichereinheit (140) vorhanden ist, der die digitalen Messwerte (M) zugeführt sind und in der eine Mehrzahl von digitalen Messwerten (M) speicherbar ist und in der Speichereinheit (140) in einem laufenden Betrieb die digitalen Messwerte (M), gesteuert von der Steuereinheit (150), im Zeitraster des Abtasttaktsignals (TA) hintereinander speicherbar sind.

6. Positionsmesseinrichtung Anspruch 5, wobei nach der Feststellung eines Kollisionsereignisses die Speicherung der digitalen Messwerte (M) in der Speichereinheit (140) in einem zweiten Zeitraum (T2) fortgeführt wird, so dass in der Speichereinheit (140) ein Signalverlauf des Kollisionsereignisses speicherbar ist, der einen ersten Zeitraum (T1) vor und den zweiten Zeitraum (T2) nach einem Kollisionszeitpunkt (K) umfasst.

7. Positionsmesseinrichtung nach einem der vorhergehenden Ansprüche, wobei in der Auswerteeinheit (210, 310) weiter eine Filtereinheit (130) vorhanden ist, der die Messwerte (MA, M) zugeführt sind und die Filtereinheit (130) als Bandsperrfilter, insbesondere als Kerbfilter ausgestaltet ist und wenigstens ein zu filterndes Frequenzband einstellbar ist.

8. Positionsmesseinrichtung Anspruch 7, wobei Positionsmesseinrichtung (5) ein Winkelmessgerät ist und die Verarbeitungseinheit (60) eine Drehzahl (N) ermittelt, die der Filtereinheit (130) zugeführt ist und wobei wenigstens ein zu filterndes Frequenzband der Filtereinheit (140) in Abhängigkeit von der Drehzahl (N) einstellbar ist.

9. Positionsmesseinrichtung nach einem der vorhergehenden Ansprüche, wobei wenigstens ein Kollisionssensor (100) ein Beschleunigungssensor oder ein Körperschallsensor ist.

10. Verfahren zum Betreiben einer Positionsmesseinrichtung, umfassend
• einen Teilungsträger (30) mit einer Messteilung (40),
• eine Abtasteinrichtung (50) zur Erzeugung von Positionssignalen (PS) durch Abtastung der Messteilung (40),
• einer Verarbeitungseinheit (60) zur Verarbeitung der Positionssignale (PS) in einen digitalen Positionswert (POS),
• eine Schnittstelleneinheit (70) zur Kommunikation mit einer Folgeelektronik (80), w
obei die Positionsmesseinrichtung (5) wenigstens einen Kollisionssensor (100) aufweist, der analoge oder digitale Messwerte (MA, M) generiert, aus deren zeitlichem Verlauf Kollisionsereignisse feststellbar sind, und wobei die Positionsmesseinrichtung (5) eine Auswerteeinheit (110, 210, 310) zur Erfassung der Messwerte (MA, M) aufweist, in der durch Auswertung des zeitlichen Verlaufs der Messwerte (MA, M) in einer Steuereinheit (150) in der Auswerteeinheit (110, 210, 310) Kollisionsereignisse festgestellt werden und bei Erkennung eines Kollisionsereignisses eine Fehlermeldung (ERR) generiert wird und die Fehlermeldung (ERR) über die Schnittstelleneinheit (70) zur Folgeelektronik (80) übertragen wird.

11. Verfahren nach Anspruch 10, wobei der zeitliche Verlauf der Messwerte (MA, M) im Zeitraster eines Abtasttaktsignals (TA) ausgewertet wird.

12. Verfahren nach einem der Ansprüche 10 oder 11, wobei der Kollisionssensor (100) ein analoger Sensor ist und in der Auswerteeinheit (110, 210) ein A/D-Wandler (120) zur Bildung von digitalen Messwerten (M) aus analogen Messwerten (MA) vorgesehen ist und wobei die Bildung der digitalen Messwerte (M) vom Abtasttaktsignal (TA) gesteuert wird, das dem A/D-Wandler (120) von der Steuereinheit (150) zugeführt wird.

13. Verfahren nach einem der Ansprüche 10 bis 11, wobei der Kollisionssensor (100) ein digitaler Sensor ist und in der Auswerteeinheit (310) eine Sensorschnittstelle (160) vorgesehen ist, über die digitalen Messwerte (M) des Kollisionssensors (100) der Auswerteeinheit (310) zugeführt werden.

14. Verfahren nach einem der Ansprüche 10 bis 13, wobei in der Auswerteeinheit (110, 210, 310) weiter eine als Ringspeicher betriebene Speichereinheit (140) vorgesehen ist, der die digitalen Messwerte (M) zugeführt werden und in der eine Mehrzahl von digitalen Messwerten (M) speicherbar ist und in der Speichereinheit (140) in einem laufenden Betrieb die digitalen Messwerte (M) im Zeitraster des Abtasttaktsignals (TA) hintereinander gespeichert werden.

15. Verfahren nach einem der Ansprüche 10 bis 14, wobei nach der Feststellung eines Kollisionsereignisses die Speicherung der Messwerte (M) in der Speichereinheit (140) in einem zweiten Zeitraum (T2) fortgeführt wird, so dass in der Speichereinheit (140) ein Signalverlauf des Kollisionsereignisses gespeichert wird, der einen ersten Zeitraum (T1) vor und den zweiten Zeitraum (T2) nach einem Kollisionszeitpunkt (K) umfasst.

16. Verfahren nach einem der Ansprüche 10 bis 15, wobei in der Auswerteeinheit (210, 310) weiter eine Filtereinheit (130) vorgesehen ist, der die Messwerte (MA, M) zugeführt werden und die Filtereinheit (130) als Bandsperrfilter, insbesondere als Kerbfilter, ausgestaltet ist und wenigstens ein zu filterndes Frequenzband einstellbar ist.

17. Verfahren nach einem der Ansprüche 10 bis 16, wobei die Positionsmesseinrichtung (5) ein Winkelmessgerät ist und die Verarbeitungseinheit (60) eine Drehzahl (N) ermittelt, die der Filtereinheit (130) zugeführt wird und wobei wenigstens ein zu filterndes Frequenzband in Abhängigkeit von der Drehzahl (N) eingestellt wird.

## Claims

1. Position measuring device comprising
• a graduation carrier (30) with a measurement graduation (40),
• a scanning device (50) for generating position signals (PS) by scanning the measurement graduation (40),
• a processing unit (60) for processing the position signals (PS) to form a digital position value (POS),
• an interface unit (70) for communicating with downstream electronics (80),
wherein the position measuring device (5) has at least one collision sensor (100) which generates analogue or digital measured values (MA, M), from the temporal profile of which collision events can be determined, and wherein the position measuring device (5) has an evaluation unit (110, 210, 310) for capturing the measured values (MA, M), wherein the evaluation unit (110, 210, 310) comprises a control unit (150) which is suitably configured to detect collision events by evaluating the temporal profile of the measured values (MA, M) and, if a collision event is detected, to generate an error message (ERR) and to transmit the error message (ERR) to the downstream electronics (80) via the interface unit (70).

2. Position measuring device according to Claim 1, wherein the temporal profile of the measured values (MA, M) is evaluated in the time frame of a scanning clock signal (TA) which is provided by the control unit (150).

3. Position measuring device according to Claim 1, wherein the collision sensor (100) is an analogue sensor and an A/D converter (120) for forming digital measured values (M) from analogue measured values (MA) is provided in the evaluation unit (110, 210), and wherein the formation of the digital measured values (M) is controlled by the scanning clock signal (TA) which is supplied to the A/D converter (120) by the control unit (150).

4. Position measuring device according to either of Claims 1 and 2, wherein the collision sensor (100) is a digital sensor and a sensor interface (160) is present in the evaluation unit (310), via which interface digital measured values (M) from the collision sensor (100) can be supplied to the evaluation unit (310).

5. Position measuring device according to any of the preceding claims, wherein a memory unit (140) operated as a ring memory is also present in the evaluation unit (110, 210, 310), to which memory unit the digital measured values (M) are supplied and in which a plurality of digital measured values (M) can be stored, and the digital measured values (M) can be stored in succession in the memory unit (140) during ongoing operation in the time frame of the scanning clock signal (TA) in a manner controlled by the control unit (150).

6. Position measuring device according to Claim 5, wherein, after a collision event has been determined, the storage of the digital measured values (M) in the memory unit (140) is continued in a second period (T2), with the result that a signal profile of the collision event, which comprises a first period (T1) before a collision time (K) and the second period (T2) after a collision time (K), can be stored in the memory unit (140).

7. Position measuring device according to any of the preceding claims, wherein a filter unit (130) is also present in the evaluation unit (210, 310), to which filter unit the measured values (MA, M) are supplied, and the filter unit (130) is in the form of a bandpass filter, in particular a notch filter, and at least one frequency band to be filtered can be set.

8. Position measuring device according to Claim 7, wherein the position measuring device (5) is an angle measuring apparatus and the processing unit (60) determines a speed (N) which is supplied to the filter unit (130), and wherein at least one frequency band to be filtered in the filter unit (140) can be set on the basis of the speed (N).

9. Position measuring device according to any of the preceding claims, wherein at least one collision sensor (100) is an acceleration sensor or a structure-borne noise sensor.

10. Method for operating a position measuring device comprising
• a graduation carrier (30) with a measurement graduation (40),
• a scanning device (50) for generating position signals (PS) by scanning the measurement graduation (40),
• a processing unit (60) for processing the position signals (PS) to form a digital position value (POS),
• an interface unit (70) for communicating with downstream electronics (80),
wherein the position measuring device (5) has at least one collision sensor (100) which generates analogue or digital measured values (MA, M), from the temporal profile of which collision events can be determined, and wherein the position measuring device (5) has an evaluation unit (110, 210, 310) for capturing the measured values (MA, M), in which collision events are determined by evaluating the temporal profile of the measured values (MA, M) in a control unit (150) in the evaluation unit (110, 210, 310) and, if a collision event is detected, an error message (ERR) is generated and the error message (ERR) is transmitted to the downstream electronics (80) via the interface unit (70).

11. Method according to Claim 10, wherein the temporal profile of the measured values (MA, M) is evaluated in the time frame of a scanning clock signal (TA).

12. Method according to either of Claims 10 and 11, wherein the collision sensor (100) is an analogue sensor and an A/D converter (120) for forming digital measured values (M) from analogue measured values (MA) is provided in the evaluation unit (110, 210), and wherein the formation of the digital measured values (M) is controlled by the scanning clock signal (TA) which is supplied to the A/D converter (120) by the control unit (150).

13. Method according to any of Claims 10 to 11, wherein the collision sensor (100) is a digital sensor and a sensor interface (160) is provided in the evaluation unit (310), via which interface digital measured values (M) from the collision sensor (100) are supplied to the evaluation unit (310).

14. Method according to any of Claims 10 to 13, wherein a memory unit (140) operated as a ring memory is also provided in the evaluation unit (110, 210, 310), to which memory unit the digital measured values (M) are supplied and in which a plurality of digital measured values (M) can be stored, and the digital measured values (M) are stored in succession in the memory unit (140) during ongoing operation in the time frame of the scanning clock signal (TA).

15. Method according to any of Claims 10 to 14, wherein, after a collision event has been determined, the storage of the measured values (M) in the memory unit (140) is continued in a second period (T2), with the result that a signal profile of the collision event, which comprises a first period (T1) before a collision time (K) and the second period (T2) after a collision time (K), is stored in the memory unit (140).

16. Method according to any of Claims 10 to 15, wherein a filter unit (130) is also provided in the evaluation unit (210, 310), to which filter unit the measured values (MA, M) are supplied, and the filter unit (130) is in the form of a bandpass filter, in particular a notch filter, and at least one frequency band to be filtered can be set.

17. Method according to any of Claims 10 to 16, wherein the position measuring device (5) is an angle measuring apparatus and the processing unit (60) determines a speed (N) which is supplied to the filter unit (130), and wherein at least one frequency band to be filtered is set on the basis of the speed (N).

## Revendications

1. Dispositif de mesure de position, comprenant
• un support de graduation (30) présentant une graduation de mesure (40),
• un dispositif de balayage (50) destiné à générer des signaux de position (PS) par balayage de la graduation de mesure (40),
• une unité de traitement (60) destinée à transformer les signaux de position (PS) en une valeur de position numérique (POS),
• une unité d'interface (70) destinée à la communication avec une électronique consécutive (80),
dans lequel le dispositif de mesure de position (5) comporte au moins un capteur de collision (100) qui génère des valeurs de mesure analogiques ou numériques (MA, M) dont l'évolution temporelle permet de déterminer des événements de collision, et dans lequel le dispositif de mesure de position (5) comporte une unité d'évaluation (110, 210, 310) destinée à acquérir les valeurs de mesure (MA, M), l'unité d'évaluation (110, 210, 310) comportant une unité de commande (150) qui est configurée de manière appropriée pour détecter des événements de collision en évaluant l'évolution temporelle des valeurs de mesure (MA, M) et, lorsqu'un événement de collision est détecté, pour générer un message d'erreur (ERR) et pour transmettre le message d'erreur (ERR) à l'électronique consécutive (80) par l'intermédiaire de l'unité d'interface (70).

2. Dispositif de mesure de position selon la revendication 1, dans lequel l'évaluation de l'évolution temporelle des valeurs de mesure (MA, M) est effectuée dans la trame temporelle d'un signal d'horloge de balayage (TA) qui est fourni par l'unité de commande (150) .

3. Dispositif de mesure de position selon la revendication 1, dans lequel le capteur de collision (100) est un capteur analogique et il est prévu dans l'unité d'évaluation (110, 210) un convertisseur A/N (120) destiné à déterminer des valeurs de mesure numériques (M) à partir de valeurs de mesure analogiques (MA) et dans lequel la détermination des valeurs de mesure numériques (M) est commandée par le signal d'horloge de balayage (TA) qui est envoyé au convertisseur A/N (120) par l'unité de commande (150).

4. Dispositif de mesure de position selon l'une des revendications 1 ou 2, dans lequel le capteur de collision (100) est un capteur numérique et il est prévu dans l'unité d'évaluation (310) une interface de capteur (160) par l'intermédiaire de laquelle des valeurs de mesure numériques (M) du capteur de collision (100) peuvent être envoyées à l'unité d'évaluation (310).

5. Dispositif de mesure de position selon l'une des revendications précédentes, dans lequel il est en outre prévu dans l'unité d'évaluation (110, 210, 310) une unité de mémoire (140) fonctionnant comme une mémoire en anneau, à laquelle sont envoyées les valeurs de mesure numériques (M) et dans laquelle une pluralité de valeurs de mesure numériques (M) peuvent être stockées et dans lequel les valeurs de mesure numériques (M) peuvent être stockées l'une après l'autre dans l'unité de mémoire (140) au cours du fonctionnement, de manière commandée par l'unité de commande (150), dans la trame temporelle du signal d'horloge de balayage (TA).

6. Dispositif de mesure de position selon la revendication 5, dans lequel, après qu'un événement de collision a été détecté, le stockage des valeurs de mesure numériques (M) dans l'unité de stockage (140) est poursuivi au cours d'une deuxième période de temps (T2), de manière à pouvoir stocker dans l'unité de stockage (140) une évolution du signal de l'événement de collision, laquelle comprend une première période de temps (T1) qui précède un instant de collision (K) et la deuxième période de temps (T2) qui suit cet instant.

7. Dispositif de mesure de position selon l'une des revendications précédentes, dans lequel il est en outre prévu dans l'unité d'évaluation (210, 310) une unité de filtrage (130) à laquelle sont envoyées les valeurs de mesure (MA, M), et l'unité de filtrage (130) est configurée sous la forme d'un filtre de réjection de bande, en particulier d'un filtre coupe-bande, et au moins une bande de fréquence à filtrer peut être réglée.

8. Dispositif de mesure de position selon la revendication 7, dans lequel le dispositif de mesure de position (5) est un dispositif de mesure d'angle et l'unité de traitement (60) détermine une vitesse de rotation (N) qui est envoyée à l'unité de filtrage (130) et dans lequel au moins une bande de fréquence à filtrer de l'unité de filtrage (140) peut être réglée en fonction de la vitesse de rotation (N).

9. Dispositif de mesure de position selon l'une des revendications précédentes, dans lequel au moins un capteur de collision (100) est un capteur d'accélération ou un capteur de bruit de structure.

10. Procédé de fonctionnement d'un dispositif de mesure de position, comprenant
• un support de graduation (30) présentant une graduation de mesure (40),
• un dispositif de balayage (50) destiné à générer des signaux de position (PS) par balayage de la graduation de mesure (40),
• une unité de traitement (60) destinée à transformer les signaux de position (PS) en une valeur de position numérique (POS),
• une unité d'interface (70) destinée à la communication avec une électronique consécutive (80),
dans lequel le dispositif de mesure de position (5) comporte au moins un capteur de collision (100) qui génère des valeurs de mesure analogiques ou numériques (MA, M) dont l'évolution temporelle permet de déterminer des événements de collision, et dans lequel le dispositif de mesure de position (5) comporte une unité d'évaluation (110, 210, 310) destinée à acquérir les valeurs de mesure (MA, M), dans laquelle des événements de collision sont déterminés en évaluant l'évolution temporelle des valeurs de mesure (MA, M) dans une unité de commande (150) de l'unité d'évaluation et, lorsqu'un événement de collision est détecté, un message d'erreur (ERR) est généré et le message d'erreur (ERR) est transmis à l'électronique consécutive (80) par l'intermédiaire de l'unité d'interface (70).

11. Procédé selon la revendication 10, dans lequel l'évolution temporelle des valeurs de mesure (MA, M) est évaluée dans la trame temporelle d'un signal d'horloge de balayage (TA).

12. Procédé selon l'une des revendications 10 ou 11, dans lequel le capteur de collision (100) est un capteur analogique et il est prévu dans l'unité d'évaluation (110, 210) un convertisseur A/N (120) destiné à déterminer des valeurs de mesure numériques (M) à partir de valeurs de mesure analogiques (MA) et dans lequel la détermination des valeurs de mesure numériques (M) est commandée par le signal d'horloge de balayage (TA) qui est envoyé au convertisseur A/N (120) par l'unité de commande (150).

13. Procédé selon l'une des revendications 10 à 11, dans lequel le capteur de collision (100) est un capteur numérique et il est prévu dans l'unité d'évaluation (310) une interface de capteur (160) par l'intermédiaire de laquelle des valeurs de mesure numériques (M) du capteur de collision (100) sont envoyées à l'unité d'évaluation (310) .

14. Procédé selon l'une des revendications 10 à 13, dans lequel il est en outre prévu dans l'unité d'évaluation (110, 210, 310) une unité de mémoire (140) fonctionnant comme une mémoire en anneau, à laquelle sont envoyées les valeurs de mesure numériques (M) et dans laquelle une pluralité de valeurs de mesure numériques (M) peuvent être stockées et les valeurs de mesure numériques (M) sont stockées l'une après l'autre dans l'unité de mémoire (140) au cours du fonctionnement, dans la trame temporelle du signal d'horloge de balayage (TA).

15. Procédé selon l'une des revendications 10 à 14, dans lequel, après qu'un événement de collision a été détecté, le stockage des valeurs de mesure (M) dans l'unité de stockage (140) est poursuivi au cours d'une deuxième période de temps (T2), de manière à stocker dans l'unité de stockage (140) une évolution du signal de l'événement de collision, laquelle comprend une première période de temps (T1) qui précède un instant de collision (K) et la deuxième période de temps (T2) qui suit cet instant.

16. Procédé selon l'une des revendications 10 à 15, dans lequel il est en outre prévu dans l'unité d'évaluation (210, 310) une unité de filtrage (130) à laquelle sont envoyées les valeurs de mesure (MA, M), et l'unité de filtrage (130) est configurée sous la forme d'un filtre de réjection de bande, en particulier d'un filtre coupe-bande, et au moins une bande de fréquence à filtrer peut être réglée.

17. Procédé selon l'une des revendications 10 à 16, dans lequel le dispositif de mesure de position (5) est un dispositif de mesure d'angle et l'unité de traitement (60) détermine une vitesse de rotation (N) qui est envoyée à l'unité de filtrage (130) et dans lequel au moins une bande de fréquence à filtrer est réglée en fonction de la vitesse de rotation (N) .
